# EUROPEAN PATENT SPECIFICATION

(11) **EP 2 263 441 B1**
(45) Date of publication and mention of the grant of the patent: **11.10.2017**
(21) Application number: 10075486.0
(22) Date of filing: 24.04.2007
(51) Int. Cl.: A01D 78/10, A01B 69/00

(54) **A haymaking machine**
Heuwerbungsmachine
Machine de fenaison

(30) Priority: 02.05.2006 NL 1031730; 24.05.2006 NL 1031873
(43) Date of publication of application: 22.12.2010
(62) Divisional of application: 09075292.4
(73) Proprietor: Maasland N.V., 3147 PA Maassluis (NL)
(72) Inventor: Stremmelaar, Egbert Antonie, 7846 AD Noord-Sleen (NL)
(74) Representative: Octrooibureau Van der Lely N.V.

(56) References cited:
- EP-A1- 0 406 140
- EP-A1- 0 507 408
- EP-A1- 0 526 365
- EP-A1- 0 554 200
- EP-A1- 0 559 024
- EP-A1- 0 709 019
- EP-A1- 1 046 335
- DE-A1- 10 317 812
- DE-A1- 19 916 759
- GB-A- 2 061 082

## Description

The invention relates to a haymaking machine according to the preamble of claim 1.

Such a haymaking machine is known from EP 0559024 A1. Although in general such a haymaking machine functions satisfactorily, in particular in case of very heavy crop there is a need for increasing the overlap of the rotors, i.e. reducing the working width, in order to keep the forces acting on the rotors within workable limits and to form smaller swaths.

In order to be able to further adjust the width of the deposited swath, a haymaking machine according to the invention is provided with a carrier frame connected with the drawbar for carrying a crop processing member, the swath board being fastened to a swath board frame that is pivotably connected with the carrier frame about a substantially horizontally extending axis, and with a pivoting plate provided with a slot by means of which the orientation of the swath board is adjustable relative to the direction of travel of the haymaking machine. The haymaking machine is in particular provided with a swath board cylinder for adjusting the orientation of the swath board relative to the direction of travel of the haymaking machine. In this case it is advantageous if one end of the swath board cylinder is connected with the swath board and the other end of the swath board cylinder is capable of being fastened in one of a number of fastening points located at different distances from the drawbar, the fastening points being provided on the swath board frame and/or the carrier frame.

It is noted that EP 1046335 A1 describes a haymaking machine which is suitable for tedding and raking. This haymaking machine has working members which rotate about vertical axes. A swath board is associated with at least one outer working member. The swath board can be displaced by means of an adjustment mechanism between working position and a non-working position.

Furthermore, it is noted that EP 0 507 408 A1 discloses a haymaking machine having two rake members. Crop picked up by the first rake member is discharged in the region between the rake members and picked up by the second rake member, is thereafter deposited at the lateral side of said second rake member against a swath board and is deposited in a swath at the lateral side of the machine. The swath board is disposed capably of pivoting about a shaft and, when the machine is adjusted to the transport position, can be hinged upwards above the machine. The width of the swath to be deposited can be set with the aid of an adjusting element.

The invention will be explained hereinafter by way of example with reference to an embodiment shown in the drawing.
Figure 1 is a schematic plan view of a haymaking machine according to the invention;

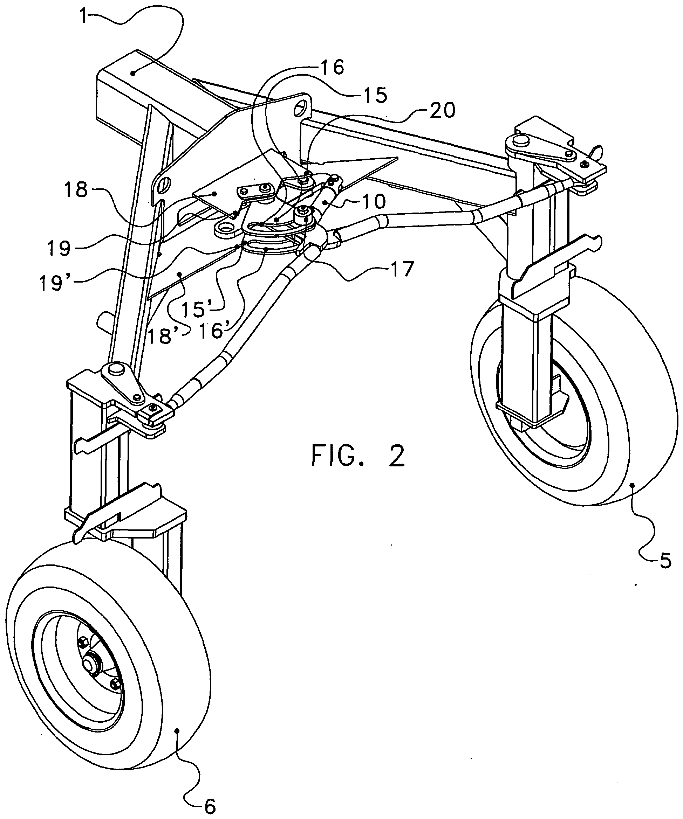

Figure 2 is a schematic perspective view of the rear part of the steering device according to the invention for adjusting the orientation of the wheel set;

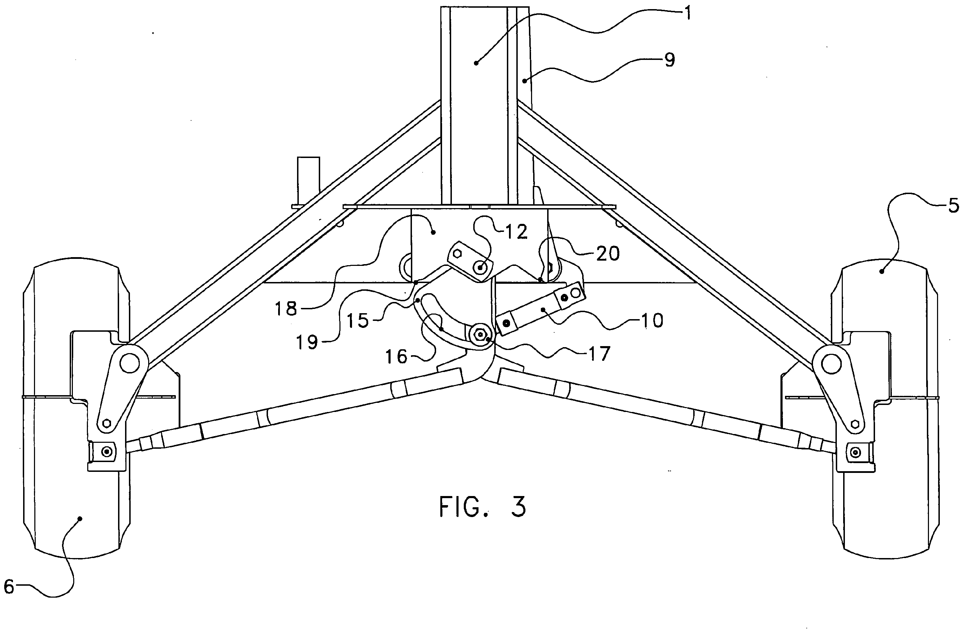

Figure 3 is a schematic plan view of the rear part of the steering device shown in Figure 2;
Figure 4 is a schematic perspective view of a detail of the rear part of the steering device shown in Figures 2 and 3, in which the steering plate is visible, the hydraulic cylinder being connected with one end of the steering plate;
Figure 5 is a schematic perspective view of the rear part of the steering device shown in Figures 2 and 3, in which the steering plate is visible, the hydraulic cylinder being connected with the other end of the steering plate;
Figure 6 is a schematic view of the hydraulic circuit with pressure relief valve, in which the hydraulic cylinder is included, and
Figure 7 is a schematic plan view of a crop processing member with an adjustable swath board to be used in a haymaking machine according to the present invention.

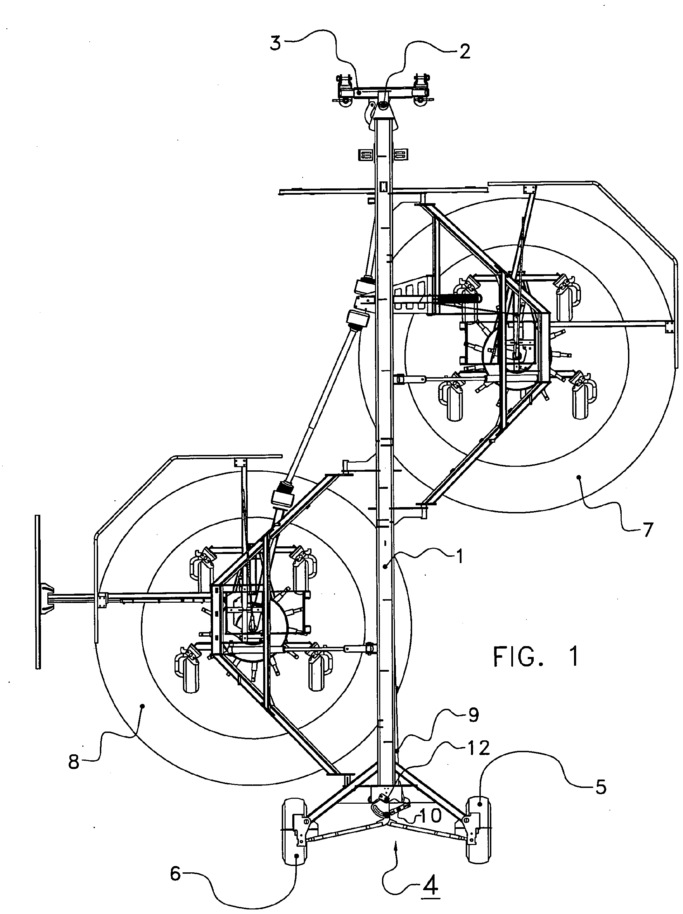

Figure 1 is a schematic plan view of an embodiment of a haymaking machine according to the present invention. The haymaking machine is provided with a drawbar 1 whose front end is fastened pivotably about a substantially upwardly orientated connecting axis 2 to a trestle 3 extending substantially transverse to the drawbar 1. The rear end of the drawbar 1 is provided with a supporting wheel set 4 comprising two wheels 5, 6 disposed on either side of the drawbar 1. A pair of drivable crop processing members 7, 8 arranged on either side of the drawbar 1 and rotatable about substantially upwardly orientated rotor axes is disposed between said front end and rear end of the drawbar 1.

The orientation of the wheels 5, 6 relative to the drawbar 1 is adjustable by means of a steering device. The steering device comprises a steering rod 9 which is pivotably connected both with the trestle 3 and with the wheel set 4, and a hydraulic cylinder 10 which has one end connected with the steering rod 9 and its other end with the wheel set 4.

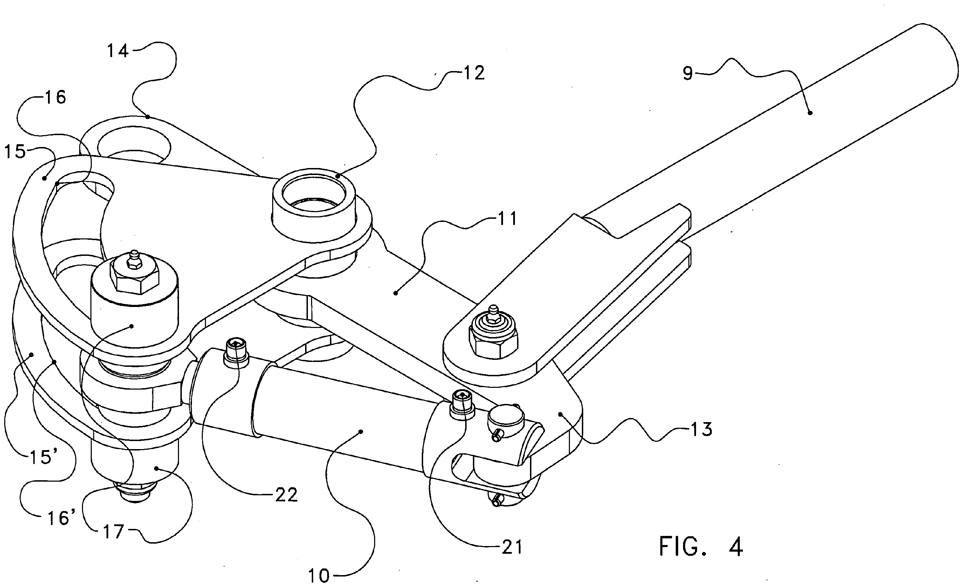

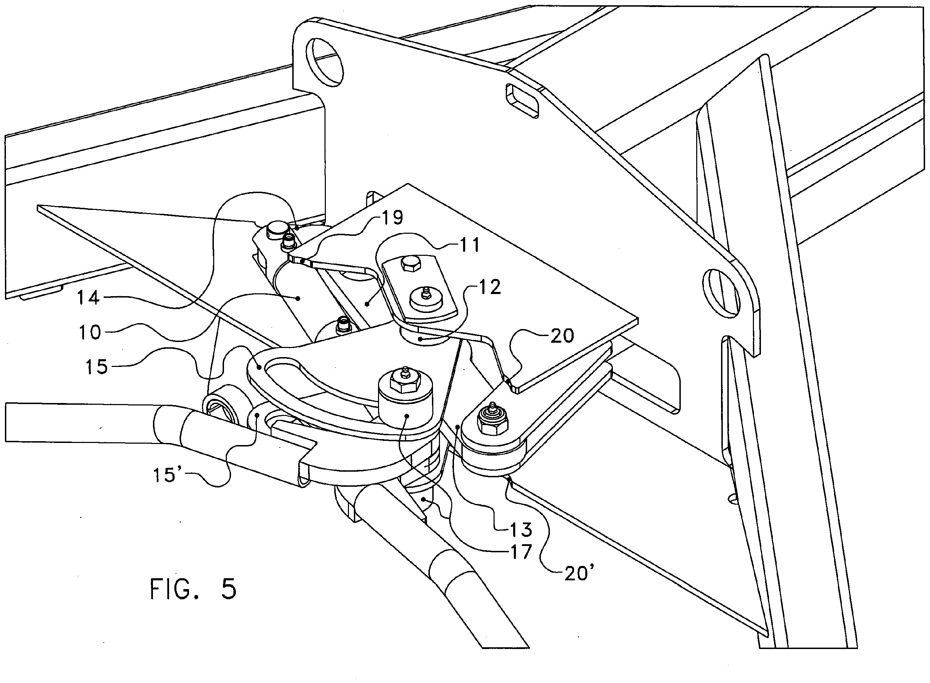

The haymaking machine is provided with a steering plate 11 fastened to the rear end of the drawbar 1 (Figure 4), which steering plate is pivotable about a substantially upwardly orientated steering axis 12 and comprises ends 13, 14 located on either side of the substantially upwardly orientated steering axis 12. The steering rod 9 is connected with one end (13 according to Figure 4, 14 according to Figure 5) of the steering plate 11. A stop plate (in the figures constituted by two sub-plates 15, 15') is disposed at least substantially transverse to the upward steering axis 12 and is connected with the steering axis 12. The stop plate 15, 15' is provided with an arched slot 16, 16' located at the side of the steering axis 12 opposite the trestle 3. One end of the hydraulic cylinder 10 is connectable with one end 13 or the other end 14 of the steering plate 11 and the other end of the hydraulic cylinder 10, which other end is connected with the wheel set 4, is fastened to a stop 17 which extends through the slot 16, 16' and is movably included in the slot 16, 16'. As shown in Figure 1, the steering axis 12 is located at least substantially in the middle of the drawbar 1 (or its prolonged end). By changing the connection of one end of the hydraulic cylinder 10 with one end 13 of the steering plate 11 into a connection of one end of the hydraulic cylinder 10 with the other end 14 it can be ensured that the haymaking machine is capable of assuming an additional operative position. In this additional operative position, the crop processing members are located at the other side of the pulling vehicle, two swaths being formed. Changing the connection place of the hydraulic cylinder 10 relative to the steering axis 12 may be effected, for example, by detaching the steering plate 11, turning it and attaching it again. Of course, it is also possible to detach the connection of one end of the hydraulic cylinder with one end of the steering plate and to attach one end of the hydraulic cylinder to the other end of the steering plate.

By operating the hydraulic cylinder, it is possible for the drawbar, and consequently for the crop processing members, to be brought into an operative position in a manner known per se.

It is thus possible to achieve three operative positions while maintaining the same direction of rotation of the crop processing members. The first of them is an operative position in which the drawbar 1, seen in the normal direction of travel, is disposed straight behind the pulling vehicle, so that the crop processing members 7, 8 are located symmetrically behind the drawbar 1. In this position, a single swath is deposited. In the second operative position, the drawbar 1, seen in the normal direction of travel, is located on the right side behind the pulling vehicle and has a smaller working width than in the first operative position because the crop processing members are disposed closer to each other. This second operative position is suitable, for example, for somewhat heavier crops that are deposited in a single swath. The third operative position can be achieved by turning the steering plate 11, or with the aid of other devices, such as for example hydraulic cylinders, the crop processing members 7, 8 being located, as described above, at the other side of the pulling vehicle, i.e., seen in the normal direction of travel, on the left side behind the pulling vehicle, and two swaths being formed.

The steering axis 12 is fastened in a stop seating plate (constituted in the figures by two sub-stop seating plates 18, 18'), which is disposed at least substantially transverse to the steering axis 12 and which is provided with stop seatings 19, 19', 20, 20' orientated towards the stop 17.

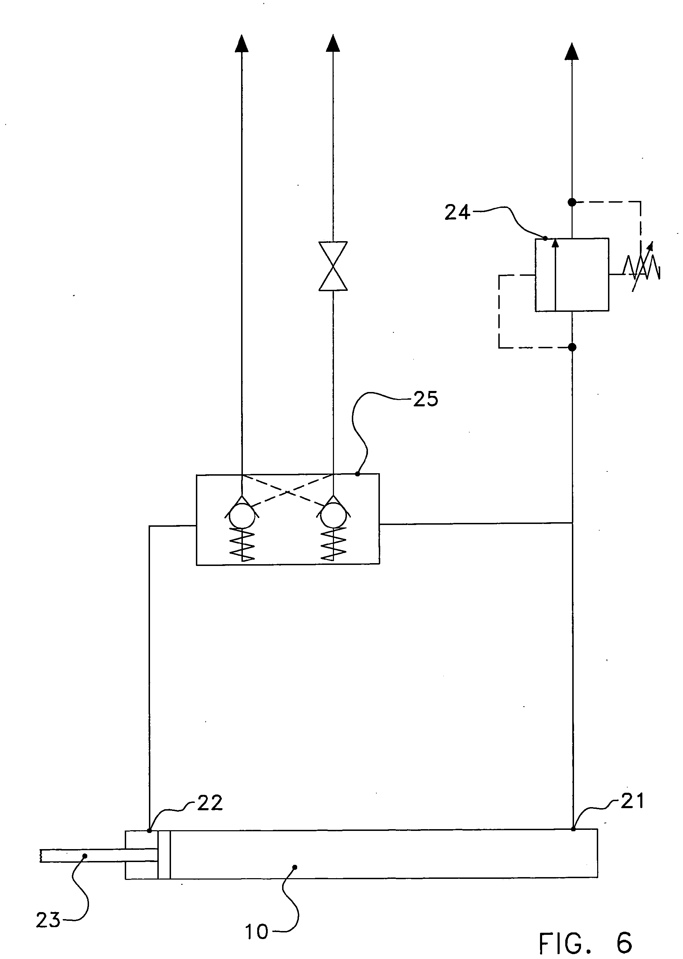

The hydraulic cylinder 10 has a first connection 21 and a second connection 22 for a hydraulic circuit as shown in more detail in Figure 6. The first connection 21 is connected, by means of a pressure relief valve 24, with the hydraulic circuit of a vehicle pulling the haymaking machine. Between the pressure relief valve 24 and the first connection 21, there is connected a branch leading to a double-controlled non-return valve 25, which non-return valve 25 also leads to the hydraulic circuit of the pulling vehicle. Said double-controlled non-return valve 25 is also connected with the second connection 22 of the hydraulic cylinder 10. Said hydraulic circuit ensures the movement of the piston 23 in the hydraulic cylinder 10.

When, in the situation that the stop 17 abuts against the stop seatings 19, 19'; 20, 20', an additional force is exerted on the cylinder, for example because of the pulling vehicle taking a still sharper bend, the pressure relief valve 24 ensures that hydraulic liquid is moved back (without pressure) to the pulling vehicle, so that the piston 23 is in fact retracted. Owing to this, an overload on the steering rod 9 and possibly on other components of the haymaking machine is prevented.

From EP-A1-0 709 019 it is known per se to include in a haymaking machine a foldable swath board for forming a swath, it being possible to move the swath board into its extreme position by means of a cylinder included in the hydraulic circuit of the folding cylinder of the crop processing members.

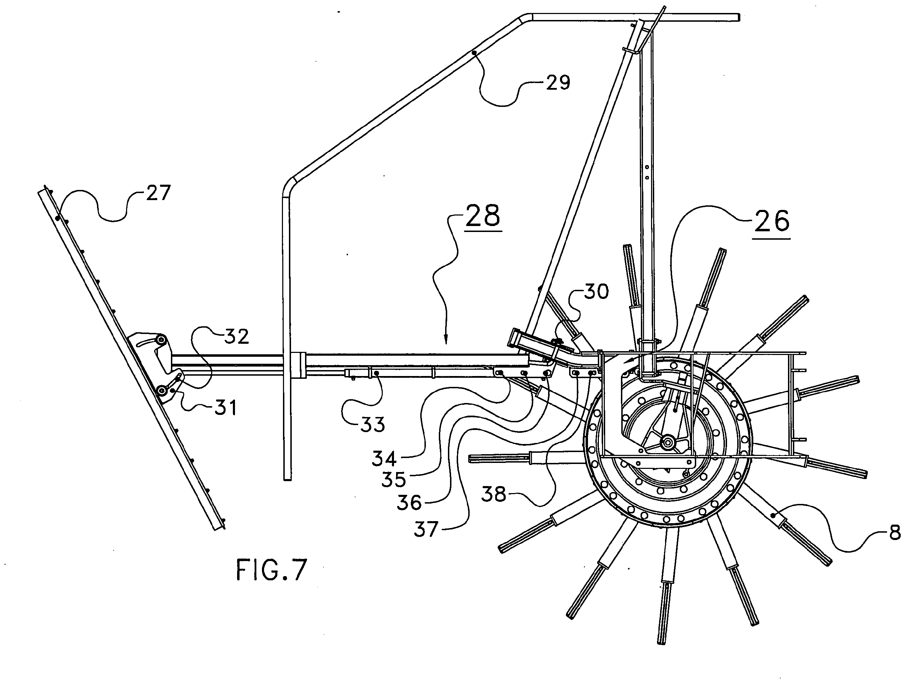

In an embodiment of the invention shown in Figure 7, the haymaking machine is provided with a carrier frame 26 connected with the drawbar 1 for carrying a crop processing member 8, a swath board 27 being fastened to a swath board frame 28, in the embodiment shown preferably integrated with the protective bracket 29 for the crop processing member 8, which is pivotably connected with the carrier frame 26 about a substantially horizontally extending axis 30. By means of a pivoting plate 31 provided with a slot 32 the orientation of the swath board 27 relative to the direction of travel of the haymaking machine is adjustable. For this purpose, it is possible to adjust the orientation before using the machine, for example by means of non-shown bolts and nuts. One end of the swath board cylinder 33 is connected with the swath board 27 and the other end of the swath board cylinder 33 is capable of being fasted in one of a number of fastening points 34 to 38 located at different distances from the drawbar 1, the fastening points 34, 35, 36 being provided on the swath board frame 28 and the fastening points 37, 38 being provided on the carrier frame 26. When the swath board cylinder 33 is fastened in one of the fastening points 34, 35, 36, the swath board (together with the protective bracket 29) can be folded up separately from the crop processing member 8, whereas this separate folding up movement cannot be carried out when the cylinder 33 is fastened in the fastening points 37, 38. By fastening in the different fastening points 34 to 38, different swath widths are adjustable.

## Claims

1. A haymaking machine provided with a drawbar (1) whose front end is fastened pivotably about a substantially upwardly orientated connecting axis (2) to a trestle (3) extending substantially transverse to the drawbar (1), and whose rear end is provided with a supporting wheel set (4) comprising two wheels (5, 6) disposed on either side of the drawbar (1), a pair of drivable crop processing members (7, 8) arranged on either side of the drawbar (1) and rotatable about substantially upwardly orientated rotor axes being disposed between said front end and rear end, the orientation of the wheels (5, 6) relative to the drawbar (1) being adjustable by means of a steering device, the steering device comprising a steering rod (9) which is pivotably connected both with the trestle (3) and with the wheel set (4), and a hydraulic cylinder (10) which has one end connected with the steering rod (9) and its other end with the wheel set (4), **characterized in that** the haymaking machine is provided with a carrier frame (26) connected with the drawbar (1) for carrying a crop processing member (7, 8), the swath board (27) being fastened to a swath board frame (28) that is pivotably connected with the carrier frame (26) about a substantially horizontally extending axis (30),
and with a pivoting plate (31) provided with a slot (32) by means of which the orientation of the swath board (27) is adjustable relative to the direction of travel of the haymaking machine.

2. A haymaking machine as claimed in claim 1, **characterized in that** one end of the swath board cylinder (33) is connected with the swath board (27) and the other end of the swath board cylinder (33) is capable of being fastened in one of a number of fastening points (34, 35, 36, 37, 38) located at different distances from the drawbar (1), the fastening points being provided on the swath board frame (28) and/or the carrier frame (26).

## Patentansprüche

1. Heuwerbungsmaschine, die mit einer Zugstange (1) versehen ist, deren vorderes Ende um eine im Wesentlichen aufrecht ausgerichtete Verbindungsachse (2) zu einem Gestell (3), das sich im Wesentlichen quer zur Zugstange (1) erstreckt, schwenkbar befestigt ist und deren hinteres Ende mit einem Stützradsatz (4) versehen ist, der zwei Räder (5, 6), die auf beiden Seiten der Zugstange (1) angeordnet sind, umfasst, wobei ein Paar antreibbarer Erntegutverarbeitungsglieder (7, 8) auf beiden Seiten der Zugstange (1) angeordnet und um im Wesentlichen aufrecht ausgerichtete Rotorachsen, die zwischen dem vorderen Ende und dem hinteren Ende angeordnet sind, drehbar ist, wobei die Ausrichtung der Räder (5, 6) bezüglich der Zugstange (1) mit einer Lenkvorrichtung einstellbar ist, wobei die Lenkvorrichtung eine Lenkstange (9), die mit sowohl dem Gestell (3) als auch mit dem Radsatz (4) schwenkbar verbunden ist, und einen Hydraulikzylinder (10), dessen eines Ende mit der Lenkstange (9) und dessen anderes Ende mit dem Radsatz (4) verbunden ist, umfasst, **dadurch gekennzeichnet, dass** die Heuwerbungsmaschine mit einem mit der Zugstange (1) verbundenen Trägerrahmen (26) zum Tragen eines Erntegutverarbeitungsglieds (7, 8) versehen ist, wobei das Schwadblech (27) an einem Schwadblechrahmen (28) befestigt ist, der mit dem Trägerrahmen (26) um eine sich im Wesentlichen horizontal erstreckende Achse (30) schwenkbar verbunden ist,
und mit einer Schwenkplatte (31), die mit einem Schlitz (32) versehen ist, mit dem die Ausrichtung des Schwadblechs (27) bezüglich der Fortbewegungsrichtung der Heuwerbungsmaschine einstellbar ist.

2. Heuwerbungsmaschine nach Anspruch 1, **dadurch gekennzeichnet, dass** ein Ende des Schwadblechzylinders (33) mit dem Schwadblech (27) verbunden ist und das andere Ende des Schwadblechzylinders (33) an einem einer Reihe von Befestigungspunkten (34, 35, 36, 37, 38), die in verschiedenen Abständen zur Zugstange (1) positioniert sind, befestigbar ist, wobei die Befestigungspunkte an dem Schwadblechrahmen (28) und/oder dem Trägerrahmen (26) vorgesehen sind.

## Revendications

1. Machine de fenaison pourvue d'une barre d'attelage (1) dont l'extrémité avant est fixée pivotante autour d'un axe de connexion (2) orienté sensiblement vers le haut à un chevalet (3) sensiblement perpendiculaire à la barre d'attelage (1) et dont l'extrémité arrière est pourvue d'un jeu (4) de roues supports comprenant deux roues (5, 6) disposées de part et d'autre de la barre d'attelage (1), une paire d'éléments pouvant être entraînés (7, 8) de traitement des récoltes, agencés de part et d'autre de la barre d'attelage (1) et pouvant tourner autour d'axes de rotor orientés sensiblement vers le haut, étant disposés entre lesdites extrémité avant et extrémité arrière, l'orientation des roues (5, 6) par rapport à la barre d'attelage (1) pouvant être réglée au moyen d'un dispositif de direction, le dispositif de direction comprenant une bielle de direction (9) qui est raccordée pivotante à la fois au chevalet (3) et au jeu (4) de roues et un vérin hydraulique (10) qui comporte une extrémité raccordée à la bielle de direction (9) et son autre extrémité au jeu (4) de roues,
**caractérisée en ce que** la machine de fenaison est pourvue d'un cadre porteur (26) raccordé à la barre d'attelage (1) pour porter un élément (7, 8) de traitement des récoltes, la planche à andains (27) étant fixée à un cadre (28) de planche à andains qui est raccordé pivotant au cadre porteur (26) autour d'un axe (30) s'étendant sensiblement horizontalement, et à une plaque pivotante (31) pourvue d'une fente (32), au moyen de laquelle on peut régler l'orientation de la planche à andains (27) par rapport à la direction de déplacement de la machine de fenaison.

2. Machine de fenaison selon la revendication 1, **caractérisée en ce qu'**une extrémité du vérin (33) de planche à andains est raccordée à la planche à andains (27) et l'autre extrémité du vérin (33) de planche à andains est susceptible d'être fixée en un point parmi un certain nombre de points de fixation (34, 35, 36, 37, 38) situés à des distances différentes de la barre d'attelage (1), les points de fixation étant disposés sur le cadre (28) de planche à andains et/ou le cadre porteur (26).
